Europäisches Patentamt

European Patent Office

Office européen des brevets

(19)

(11) Publication number : **0 208 756**
**B1**

# EUROPEAN PATENT SPECIFICATION

(12)

(45) Date of publication of patent specification :
05.04.89

(51) Int. Cl.⁴ : **B 62 D 49/06**, B 62 D 59/04,
B 62 D 55/065

(21) Application number : 86900802.9

(22) Date of filing : 17.01.86

(86) International application number :
PCT/GB 86/00033

(87) International publication number :
WO/8604310 (31.07.86 Gazette 86/17)

(54) SLAVE UNIT.

<table>
<tr><td>

(30) Priority : 17.01.85 GB 8501205

(43) Date of publication of application :
21.01.87 Bulletin 87/04

(45) Publication of the grant of the patent :
05.04.89 Bulletin 89/14

(84) Designated contracting states :
AT BE CH DE FR GB IT LI LU NL SE

(56) References cited :
EP-A- 0 066 677
DE-A- 2 225 670
FR-A- 2 327 906
GB-A- 936 574
GB-A- 986 937
GB-A- 1 548 665
GB-A- 2 065 837
US-A- 3 061 030

</td><td>

(73) Proprietor : PERITATE LIMITED
Helicopter Farming Limited Bythorn
Huntingdon Cambridgeshire (GB)

(72) Inventor : BEECHAM, Anthony, George
Helicopter Farming Limited Bythorn
Huntingdon Cambridgeshire (GB)

(74) Representative : Robinson, John Stuart et al
MARKS & CLERK 57/60 Lincoln's Inn Fields
London WC2A 3LS (GB)

</td></tr>
</table>

## Description

The present invention relates to a slave unit for use with a prime mover vehicle. More particularly but not exclusively, the present invention relates to a slave unit intended for agricultural or other land use with a tractor as prime mover vehicle.

GB-A-936 574 discloses an arrangement for controlling railway locomotives for sharing the load of a train. A main locomotive is coupled to the front of the train and at least one helper locomotive is coupled remotely from the main locomotive within the train. The helper locomotive has a control system which uses a strain gauge to sense the force acting at the front coupling or drawbar and controls the power of the helper locomotive so as to keep this force substantially at zero. This avoids the problems associated with « double-heading » ie locating the helper locomotive immediately behind the main locomotive, namely the very large loads exerted on the couplings and frames of the vehicles at the front of the train.

GB-A-986 937 also discloses an arrangement for controlling vehicles, specifically railway locomotives for sharing the load of a train. The vehicles are arranged such that there is a forward vehicle having a prime mover and a rearward vehicle having a prime mover and located anywhere behind the forward vehicle. The force between two directly coupled vehicles, of which the coupling is forward of the rearward vehicle and may be the front coupling of the vehicle, is measured and used to control the rearward vehicle so that this force is maintained within predetermined limits, for instance substantially equal to zero.

Although this patent specification is mainly concerned with railway trains in which the rearward locomotive is located remotely from the forward locomotive, its disclosure encompasses other types of vehicles with prime movers and location of the rearward vehicle immediately behind the forward vehicle.

GB-A-2 065 837 discloses a system for controlling the transmission of a vehicle. The system prevents the transmission from being engaged until engine output has reached a predetermined level. Thus, the engine can run fast enough to power auxiliary functions without providing transmission output. Above the predetermined output, the transmission adapts to the engine speed.

US-A-3 061 030 discloses an arrangement for controlling the speed of multiple drive units. The front and rear portions of an articulated vehicle have respective engines and torque converters driving front and rear axles. A pneumatic or hydraulic control system is provided for controlling both engines in response to operation of a throttle control by a driver. When the vehicle is travelling in a straight line, the engines operate at substantially the same throttle adjustment, and hence speed. When the vehicle turns a corner, the speed of the rear engine is automatically reduced to try to avoid slipping of the rear wheels.

DE-A-2 225 670 discloses an arrangement for coupling together the controls of a relatively narrow tractor and a wider tractor which straddles the narrow tractor. The driver operated controls are linked together to allow control of both tractors by a single driver.

Attention is also directed to US-A-4 505 347, US-A-1 942 637, US-A-3 828 871, US-A-4 171 028, US-A-3 578 096, US-A-4 610 325, US-A-3 817 341, and DE-A-1 066 875, which disclose various arrangements for coupling together vehicles.

According to the invention, there is provided a slave unit as defined in the appended Claim 1.

Preferred embodiments of the invention are defined in the appended dependent claims.

It is thus possible to provide a slave unit which is not a prime mover vehicle but which can automatically supplement the tractive effort of a prime mover vehicle. Prime mover vehicles are relatively complicated and expensive to manufacture, and are necessary where each prime mover vehicle must be capable of independent use. In the case of railway locomotives, for example, the helper locomotives are required to be capable of independent use to pull trains when not required to share the load with a main or forward locomotive. The present invention provides a slave unit which is not a prime mover vehicle and which may therefore be less complex and cheaper to manufacture.

The slave unit can only be used in association with a prime mover vehicle and is not capable of being used as an independent vehicle. The slave unit is preferably arranged to function substantially independently of the control system of a prime mover vehicle with which it may be associated. Thus, it may simply be coupled to the rear of a prime mover vehicle without requiring any modification of or connection to the control system of the prime mover vehicle. This greatly simplifies connection and disconnection of the slave unit, which may be performed rapidly in the field by non-expert personnel.

When the slave unit is intended for agricultural or other land use, it can be coupled to the rear drawbar of a tractor and, once the slave unit engine is operational, functions to supplement the tractive effort provided by the tractor. When the load requirements are reduced to a level where the supplementary tractive effort is not required, the slave unit is merely decoupled to allow the tractor to function normally.

The or each ground-contacting element will normally be a wheel. However, for use over terrain where wheels would not provide sufficient grip, the or each ground-contacting element could be a track. In a preferred embodiment, two wheels are provided on a common axle.

The predetermined force may, for instance, be 20 % of the maximum tractive effort of the prime mover vehicle. In this case, when moving away from rest, the prime mover vehicle provides tractive effort, and the slave unit supplies little or no tractive effort, until the force in the coupling exceeds 20 % of the maximum tractive effort of the prime mover vehicle. The control means then controls the drive of the slave unit so as to maintain the force in the coupling at this value for as long as the required tractive effort is greater than 20 % of the maximum tractive effort of the prime mover vehicle. If the load becomes greater than the maximum tractive effort of the slave unit plus 20 % of the maximum tractive effort of the prime mover vehicle, the slave unit continues to supply its maximum tractive effort and the prime mover vehicle supplies the difference between that and the load.

If it is necessary to pull a load greater than the combined tractive efforts of the slave unit and the prime mover vehicle, one or more further slave units may be coupled to the rear of the slave unit.

In a preferred embodiment, the control means includes damping means, such as a low-pass filter, for damping the response of the drive control to the transducer signal. Such damping is desirable in order to prevent « hunting » ie oscillatory drive, of the slave unit.

The use of the closed hydraulic circuit in the hydraulic transmission, not only provides power transmission in a readily controllable way but also provides braking of the slave unit. Drive control may be achieved by controlling the engine or the hydraulic transmission, but is preferably achieved by controlling both. When the control means senses a reduced tensile force or a compressional force at the front coupling, the drive is reduced and the back-pressure in the closed hydraulic circuit provides a braking effect on the ground-contacting elements of the slave unit. It is thus unnecessary to provide a separate braking system on the slave unit so that unnecessary complexity and expense of manufacture can be avoided. It is also unnecessary to provide braking control from the prime mover vehicle, thus allowing simple connection and disconnection of the slave unit. The engine of a slave unit equipped with hydraulic transmission will normally be an internal combustion engine such as a compression-ignition or diesel engine.

The load at the drawbar can be accurately sensed using a sensor which senses the relative movement of the drawbar and the slave unit. The tractive effort applied to the wheels or tracks can be accurately sensed immediately at the output of the slave unit engine, or indirectly at the wheels or tracks.

A microprocessor may be used to control the slave unit by seeking to maintain a constant, optimum engine speed through variation in the transmission between the engine of the slave unit and the wheels or tracks of the slave unit.

The transmission can then be controlled by the microprocessor through simple adjustment of an hydraulic valve actuating the speed control of the engine. For instance, the microprocessor can be set to reduce the effective gear ratio whenever the engine speed falls below a predetermined value and correspondingly to increase the effective gear ratio whenever the engine speed rises above a predetermined value.

The slave unit typically has a pair of driven wheels mounted on a common shaft, though other configurations are envisaged. The slave unit itself preferably has a drawbar or other point for attachment of items to be pulled by the combination of the prime mover vehicle and the slave unit. The slave unit may also be provided with a power offtake for transfer of drive.

The present invention is illustrated by the following embodiment described with reference to the accompanying drawings, in which :

Figure 1 is a side elevation of a slave unit constituting a first embodiment of the present invention ;

Figure 2 is a schematic diagram of the principal control elements in the slave unit of Figure 1 ;

Figure 3 is a side view of a slave unit constituting a second embodiment of the invention coupled to an agricultural tractor ;

Figures 4 and 5 are side and top exploded views, respectively, of a front coupling or drawbar of the slave unit of Figure 3 ;

Figure 6 is a diagram of an hydraulic transmission of the slave unit of Figure 3 ; and

Figure 7 is a block circuit diagram of an electronic control system of the slave unit of Figure 3.

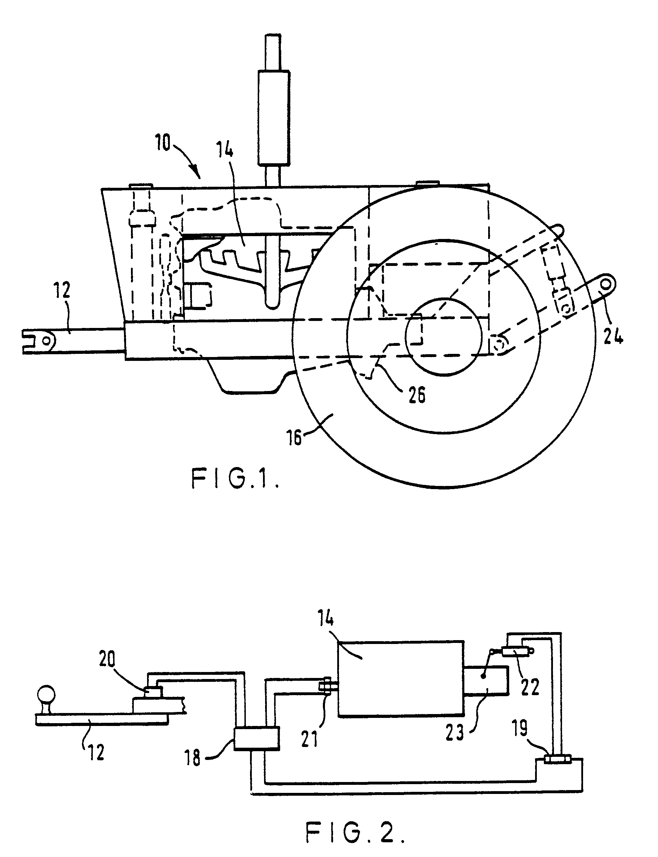

Referring first to Figure 1, a slave unit 10 is intended for agricultural use to augment a conventional tractor (not shown). The slave unit 10 is linked to the tractor through a drawbar 12 and has an engine 14 with an hydraulic transmission 26 for driving a pair of wheels 16.

Referring now also to Figure 2, control of the engine 14 of the slave unit is governed by a microprocessor 18 which compares the load at the drawbar 12 and the tractive effort applied to the wheels 16. The load at the drawbar is sensed using a sensor 20 which senses the relative movement of the drawbar and the slave unit. The tractive effort applied to the wheels is sensed at the output of the slave unit engine by a shaft speed sensor 21. The transmission 14 of the slave unit is hydraulically operated and the microprocessor 18 adjusts the supply of hydraulic fluid by means of a solenoid operated two-way hydraulic valve 19 to a hydraulic valve 22 actuating the speed control of a hydrostatic pump 23 forming part of the transmission. In this instance, the transmission is varied when the engine speed falls below 1 700 rpm or rises above 2 000 rpm, the variation being effected to bring the engine speed back within the range of 1 700 to 2 000 rpm.

Thus, the effect is that the slave unit closely follows the output of the tractor and allows optimization of the combined tractive effort : if the tractor is pulling strongly on the drawbar then the microprocessor reduces the effective gear ratio and speeds up the engine on the slave unit, while if the slave unit is tending to catch up the tractor then the effective gear ratio is increased and the slave unit engine is slowed down.

The slave unit itself has a drawbar 24 for attachment of items to be pulled by the combination of the tractor and the slave unit.

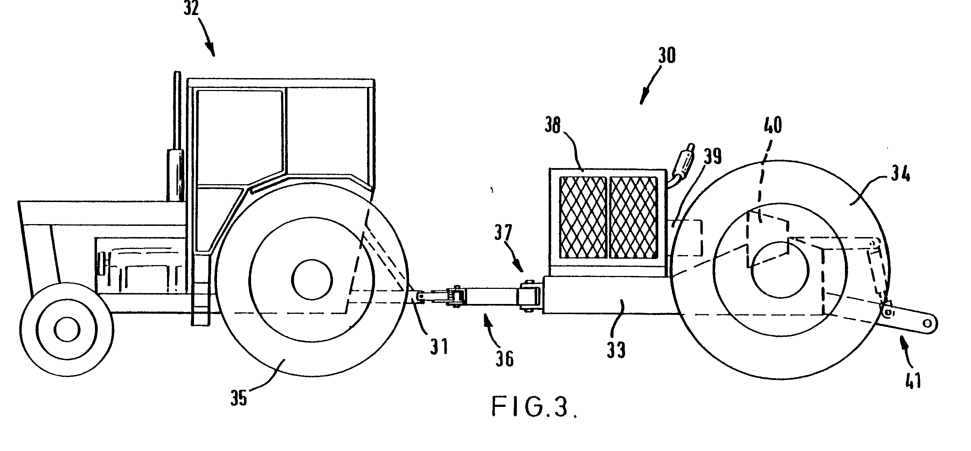

Figure 3 shows another slave unit 30 coupled to the rear coupling or drawbar 31 of an agricultural tractor 32. The slave unit 30 comprises a frame or chassis 33 carried by a pair of wheels and tyres 34 mounted on a rigid axle and of a size equal or similar to the rear wheels and tyres 35 of the tractor 32.

The slave unit is attached to the drawbar 31 of the tractor 32 by means of a coupling or drawbar arrangement 36 which is articulated at 37.

The chassis 33 carries a compression-ignition or diesel engine located within a housing 38 and mounted transversely of the slave unit. The engine drives a hydrostatic swash-plate pump 39 which, together with an hydraulic motor 40, forms an hydraulic transmission for transmitting tractive effort from the engine to the wheels and tyres 34.

At the rear of the slave unit 33, there is provided a drawbar or coupling arrangement 41 of the same type as the drawbar 31 at the rear of the tractor 32. The slave unit may also be provided at its rear with a power off-take of the same type as provided at the rear of standard agricultural tractors, so that any implement which can be operated at the rear of a standard tractor can also be operated by the slave unit 30.

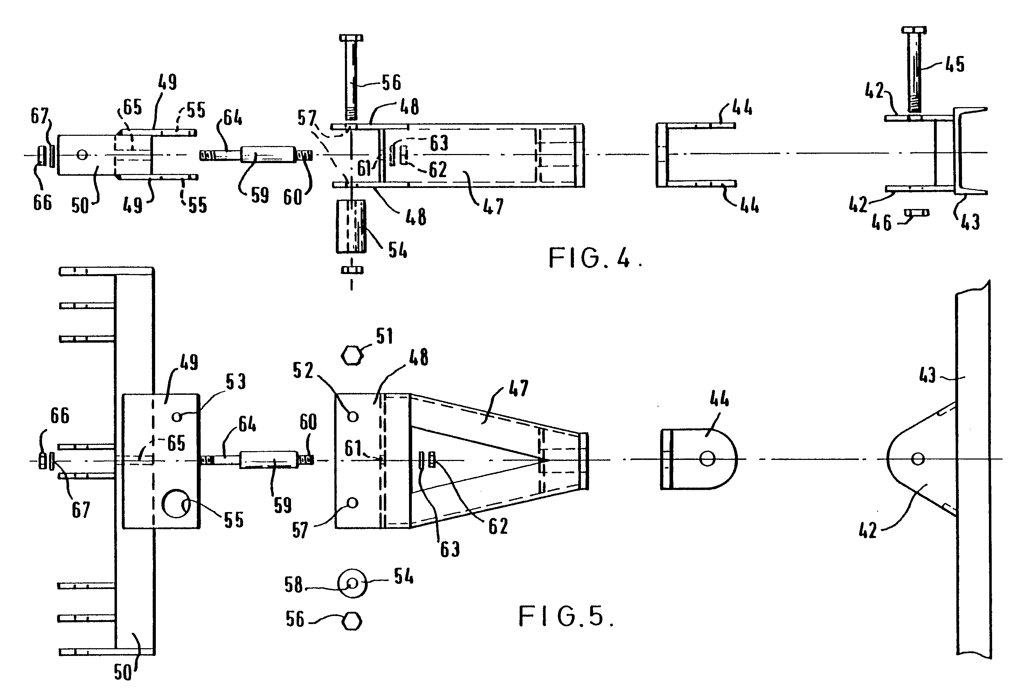

The coupling arrangement 36 is shown in more detail in Figures 4 and 5, and comprises a pair of parallel spaced plates 42 fixed to a front chassis member 43 of the slave unit. Another pair of spaced parallel plates 44 is received between the plates 42 and articulated thereto by means of a pin 45 held in place by a nut 46. The plates 44 are longitudinally fixed to the rear of an intermediate member 47 which, at its front, has parallel spaced plates 48, but are pivoted about a longitudinal axis so as to allow relative rolling motion. The plates 48 embrace another pair of plates 49 which are fixed to a standard type of drawbar 50 for connection to a lead tractor or other vehicle.

At one side, the plates 48 and 49 are connected together by means of a pin 51 which is a tight clearance fit in holes 52 and 53 in the plates 48 and 49, so that the drawbar 50 can pivot with respect to the intermediate member 47 about the axis of the pin 51 with minimal play. On the other side, the drawbar 50 is connected to the intermediate member 47 by means of a metalastic bush 54. The bush 54 is of cylindrical shape and is a tight fit within holes 55 in the plates 49. The bush is fixed to the intermediate member 47 by means of a pin 56 which is a tight clearance fit through holes 57 in the plates 48 and through a centre hole 58 of the metalastic bush 54.

The metalastic bush 54 comprises a central metal tube to whose surface is bonded a cylindrical synthetic rubber covering. The rubber covering is capable of limited resilient deformation when the coupling arrangement is under load.

A load cell 59 comprising a strain gauge is connected between the intermediate member 47 and the drawbar 50. The load cell 59 has a first threaded end 60 which passes through a hole 61 in the intermediate member 47 and is fixed by means of a nut 62 and washer 63. The other end of the load cell 59 comprises a shaft 64 which passes through a hole 65 in the drawbar 50 and is fixed by means of a nut 66 and a washer 67.

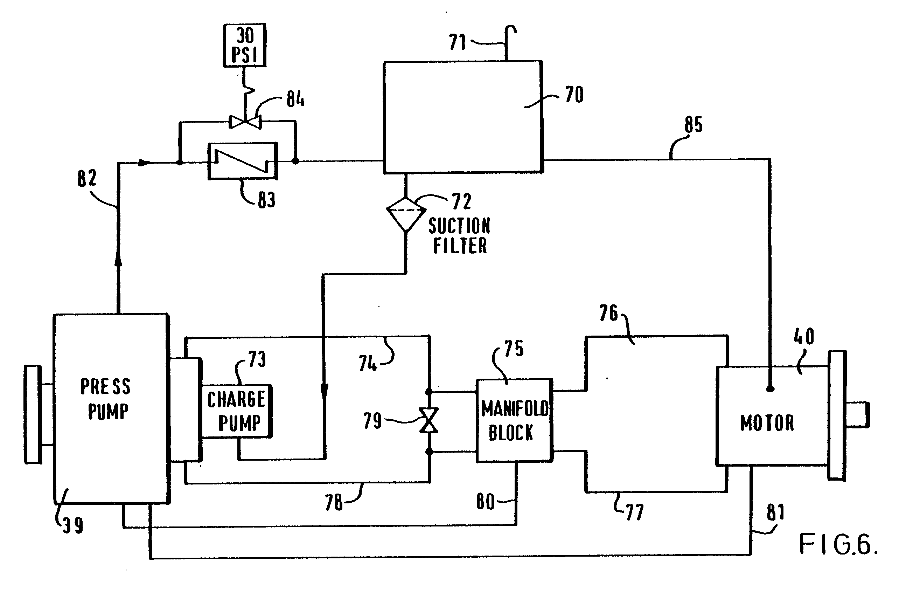

Figure 6 shows diagramatically the hydraulic system of the slave unit 30. The hydraulic system includes the swash plate pump 39 and the motor 40 forming the principle elements of the hydraulic transmission of the slave unit. A reservoir 70 with an overflow 71 supplies hydraulic fluid via a suction filter 72 to a charge pump 73. The charge pump 73 is part of the pump 39 and ensures that the swash plate pump and the main hydraulic circuit are always fully supplied with hydraulic fluid.

The main hydraulic circuit between the pump 39 and the motor 40 comprises a pump output pipe 74, supply ducts within a manifold block 75, a motor supply pipe 76, a motor return pipe 77, return ducts in the manifold block 75, and a pump input pipe 78. An optional by-pass valve 79 is shown in the drawing and may be provided in order to permit rapid shut-down of the hydraulic transmission in an emergency. For instance, the valve may be actuated by a sensor located at the front of the slave unit for detecting when the tractor and slave unit pivot in a vertical plane about the coupling arrangement 36 beyond a predetermined angle towards each other.

The pump 39 further comprises a return pump for returning hydraulic fluid to the reservoir 70. A return pipe 80 returns fluid which may leak past seals within the manifold block 75 to the return pump. Similarly, a return pipe 85 returns hydraulic fluid which leaks past seals within the motor 40. Such leaking within the motor 40 is generally intentional and is used to aid lubrication of the motor. The return pump supplies the returned hydraulic fluid via a pipe 82 to the reservoir 70. A cooler or heat exchanger 83 is connected in series with the pipe 82 and is provided with a bypass valve 84 which opens when the pressure drop across the cooler 83 exceeds 30lbs per square inch (approximately 200,000 neutons per square metre) so as to bypass the cooler 83. When the hydraulic fluid is cold, the pressure drop across the cooler is above this threshold level and the fluid bypasses the cooler via the valve 84. However, when the hydraulic fluid has warmed up, the pressure drop across the cooler falls below the threshold level so that the hydraulic fluid flows through the cooler 83 and is cooled. Where the motor 40 is a two speed wash plate motor, a pipe 81 supplies fluid to the motor to move the swash plate between its two settings.

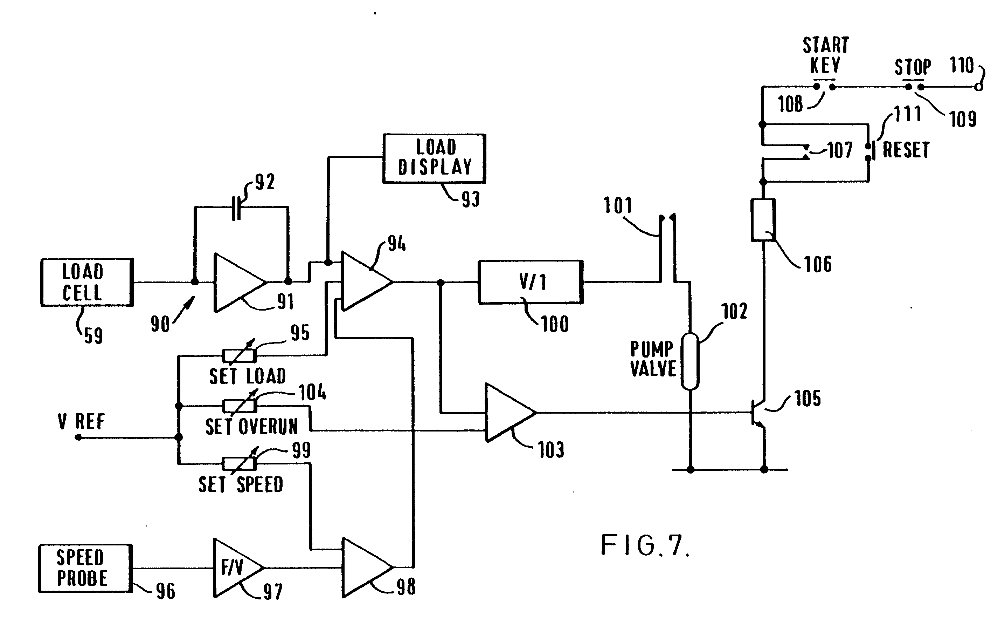

Figure 7 shows the electronic control system of the slave unit. The load cell 59 is connected to the input of a damping circuit 90 which is illustrated diagramatically as an integrator comprising an operational amplifier 91 and an integrating capacitor 92. The damping circuit 90 effectively functions as a low pass filter and its purpose is to damp or suppress « hunting » or oscillation of the drive supplied by the slave unit. The output of the damping circuit 90 is connected to an optional load display 93 for displaying the load at the coupling 36 of the slave unit. The output of the damping circuit 90 is also connected to a first input of a comparator circuit 94.

A second input of the comparator circuit 94 is connected to a first terminal of an adjustable resistor 95 whose second terminal is connected to receive a reference voltage V REF. The adjustable resistor 95 is adjusted to set the threshold load at the coupling arrangement 36 above which the slave unit begins to provide tractive effort.

A speed probe or sensor 96 monitors the rotational speed of an output shaft of the engine of the slave unit and provides a signal whose frequency is proportional to the output speed. This signal is supplied to a frequency-to-voltage converter 97 which supplies a signal whose voltage is dependent on the frequency of the signal from the speed probe 96 to a first input of a comparator circuit 98. A second input of the comparator circuit 98 is connected to a first terminal of a variable resistor 99 whose second terminal receives the reference voltage V REF. The output of the comparator circuit 98 is connected to a third input of the comparator circuit 94.

The output of the comparator circuit 94 is connected to a driver circuit 100 whose output is connected via a pair of relay contacts 101 to a pump valve actuator 102 which controls the swash plate angle, and hence the hydraulic output, of the pump 39.

The output of the comparator circuit 94 is connected to a first input of a comparator 103. A second input of the comparator 103 is connected to a first terminal of an adjustable resistor 104 whose second terminal receives the reference voltage V REF. The output of the comparator 103 is connected to the base of a transistor 105 whose collector is connected to a first terminal of a relay coil 106. A second terminal of the relay coil 106 is connected via a second pair of relay contacts 107, a start key switch 108, and a stop push button switch 109 to a power supply terminal 110. A reset push button switch 111 is connected in parallel with the contacts 107.

The control system shown in Figure 7 operates as follows. The comparator circuit 94 compares the load detected by the load cell 59 in the coupling arrangement 36 with the threshold load set by the adjustable resistor 95 and the engine speed. If the load in the front coupling is below the predetermined level, for instance set at 20 % of the maximum tractive effort of the tractor 32, the comparator circuit 94 shuts off the pump 39 so that no drive is supplied to the wheels 34 of the slave unit 30. When the load on the coupling arrangement exceeds the predetermined threshold level, the comparator circuit 94 controls the pump 39 so as to supply hydraulic fluid to the motor 40 to augment the tractive effort supplied by the tractor 32. The comparator circuit 94 adjusts the pump output, and hence the effective transmission ratio of the hydraulic transmission, so that the speed of the engine is maintained within a predetermined range of a set speed preset by means of the adjustable resistor 99. The engine in turn is governed by controlling delivery of fuel so that it tends to maintain a constant speed.

The comparator 103 compares the output of the comparator circuit 94 with a set overrun threshold preset by the adjustable resistor 104. When the output signal of the comparator circuit 94 falls to a value below the set overrun threshold, corresponding to sudden deceleration of the tractor 32, the comparator 103 actuates the relay 106 via the transistor 105 and opens the relay contacts 101 so as to shut down the pump 39. Shutting down of the pump results in hydraulic braking of the wheels 34 of the slave unit so as to assist in decelerating the combination of the tractor 32 and the slave unit 30.

The stop button 109 allows drive to be shut down manually in an emergency. In order for normal operation of the slave unit to be resumed, the reset push button 11 is actuated so as to reset the relay 106.

## Claims

1. A slave unit (10, 30) for use with a prime mover vehicle (32), comprising at least one ground-contacting element (16, 34), an engine (14), an hydraulic transmission (26, 39, 40) for transmitting drive to the at least one ground-contacting element (16, 34), a coupling (12, 36) for coupling the slave unit (10, 30) to the prime mover vehicle (32), a transducer (20, 59) for measuring the force acting on the coupling (12, 36), and control means (18, 19, 22, 90-111) for controlling the drive to the at least one ground-contacting element, characterised in that the transmission comprises an hydraulic pump (23, 39) arranged to be driven by the engine (14), an hydraulic motor (40) arranged to drive the at least one ground-contacting element (16, 34), and a closed hydraulic circuit (74-78) connecting the hydraulic pump (23, 39) to the hydraulic motor (40), and in that the control means (18, 19, 22, 90-111) is arranged to control the drive to the at least one ground-contacting element (16, 34) so as to tend to minimise the amount by which the force acting on the coupling (12, 36) exceeds a predetermined force, whereby the at least one ground-contacting element (16, 34) is hydraulically braked when the drive is reduced by the control means (18, 19, 22, 90-111).

2. A slave unit as claimed in Claim 1, characterized in that the hydraulic pump (23, 39) is a swash plate pump.

3. A slave unit as claimed in Claim 1, characterized in that the control means (90-111) includes damping means (91, 92) for damping the response of the drive control to the output of the transducer (59).

4. A slave unit as claimed in Claim 1, characterized in that the control means (18, 19, 22, 90-111) is arranged to control the transmission so as to tend to maintain the engine speed in a predetermined optimum range.

**Patentansprüche**

1. Nachführeinheit (10, 30) für die Verwendung mit einem Zugfahrzeug (32) umfassend zumindest einen am Boden aufliegenden Bauteil (16, 34), einen Motor (14), eine hydraulische Kraftübertragung (Getriebe) (26, 39, 40) zur Übertragung von Antriebskraft an den zumindest einen am Boden aufliegenden Bauteil (16, 34), eine Kupplungseinrichtung (12, 36) zum Ankuppeln der Nachführeinheit (10, 30) am Zugfahrzeug (32), einen Transducer bzw. eine Übertragungseinrichtung (20, 59) zur Messung der auf die Kupplungseinrichtung (12, 36) einwirkenden Kraft, eine Steuereinheit (18, 19, 22, 90 bis 111) zur Steuerung der Antriebskraft auf den zumindest einen am Boden aufliegenden Bauteil, dadurch gekennzeichnet, daß die Kraftübertragung eine von dem Motor (14) angetriebene hydraulische Pumpe (23, 39), einen Hydraulikmotor (40) zum Antrieb des zumindest einen am Boden aufliegenden Bauteiles (16, 34) und einen geschlossenen Hydraulikkreis (74 bis 78) umfaßt, der die hydraulische Pumpe (23, 39) mit dem Hydraulikmotor (40) verbindet, und daß die Steuereinheit (18, 19, 22, 90 bis 111) zur Steuerung der Antriebskraft auf den zumindest einen am Boden aufliegenden Bauteil (16, 34) vorgesehen ist, um das Ausmaß zu minimieren, um das die auf die Kupplungseinrichtung (12, 36) einwirkende Kraft einen vorgegebenen Kraftwert übersteigt, wobei der zumindest eine am Boden aufliegende Bauteil (16, 34) hydraulisch gebremst wird, wenn die Antriebskraft von der Steuereinheit (18, 19, 22, 90 bis 111) verringert wird.

2. Nachführeinheit nach Anspruch 1, dadurch gekennzeichnet, daß die Hydraulikpumpe (23, 39) eine Trommel- bzw. Taumelscheibenpumpe ist.

3. Nachführeinheit nach Anspruch 1, dadurch gekennzeichnet, daß die Steuereinheit (90 bis 111) zur Dämpfung des Ansprechens der Kraftsteuerung auf das Ausgangssignal des Transducers (59) eine Dämpfungseinrichtung (91, 92) umfaßt.

4. Nachführeinheit nach Anspruch 1, dadurch gekennzeichnet, daß die Steuereinheit (18, 19, 22, 90 bis 111) die Kraftübertragung steuert, um so die Motorgeschwindigkeit in einem vorgegebenen optimalen Bereich zu halten.

**Revendications**

1. Ensemble asservi (10, 30) destiné à être utilisé avec un véhicule (32) muni d'un moteur principal, comprenant au moins un élément de contact avec le sol (16, 34), un moteur (14), une transmission hydraulique (26, 39, 40) destinée à transmettre la puissance motrice à l'élément de contact avec le sol au moins (16, 34), un accouplement (12, 36) destiné à accoupler l'ensemble asservi (10, 30) au véhicule (32) ayant un moteur principal, un transducteur (20, 59) destiné à mesurer la force agissant sur l'accouplement (12, 36), et un dispositif de commande (18, 19, 22, 90-111) destiné à commander la transmission d'énergie à l'élément de contact avec le sol au moins, caractérisé en ce que la transmission comporte une pompe hydraulique (23, 39) destinée à être entraînée par le moteur (14), un moteur hydraulique (40) destiné à entraîner l'élément de contact avec le sol au moins (16, 34), et un circuit hydraulique fermé (74-78) reliant la pompe hydraulique (23, 39) au moteur hydraulique (40), et en ce que le dispositif de commande (18, 19, 22, 90-111) est destiné à commander l'entraînement de l'élément de contact avec le sol au moins (16, 34) de manière qu'il ait tendance à réduire au minimum l'amplitude de dépassement d'une force prédéterminée par la force agissant sur l'accouplement (12, 36), si bien que l'élément de contact avec le sol au moins (16, 34) est freiné hydrauliquement lorsque la puissance motrice est réduite par le dispositif de commande (18, 19, 22, 90-111).

2. Ensemble asservi selon la revendication 1, caractérisé en ce que la pompe hydraulique (23, 39) est une pompe à plateau oscillant.

3. Ensemble asservi selon la revendication 1, caractérisé en ce que le dispositif de commande (90-111) comporte un dispositif (91, 92) d'amortissement de la réponse de la commande de la puissance motrice au signal de sortie du transducteur (59).

4. Ensemble asservi selon la revendication 1, caractérisé en ce que le dispositif de commande (18, 19, 22, 90-111) est destiné à commander la transmission afin qu'elle ait tendance à maintenir la vitesse du moteur dans une plage optimale prédéterminée.

FIG.1.

FIG.2.

FIG.3.

EP 0 208 756 B1

FIG. 4.

FIG. 5.

FIG.6.

EP 0 208 756 B1

FIG.7.

START KEY
STOP 110
108
107 RESET
111
109
106
LOAD DISPLAY
93
92
101
94
LOAD CELL
59
90
91
V/1
100
102
95
SET LOAD
104
SET OVERUN
PUMP VALVE
99
SET SPEED
103
105
V REF
SPEED PROBE
96
F/V
97
98

EP 0 208 756 B1